# EUROPEAN PATENT APPLICATION

(11) **EP 4 464 151 A1**
(43) Date of publication of application: **20.11.2024**
(21) Application number: 23920283.1
(22) Date of filing: 26.10.2023
(51) Int. Cl.: A01K 1/01, B65B 43/54, G01F 23/00

(54) **FECES COLLECTION TRAY AND FULLNESS DETECTION METHOD**

(30) Priority: 31.03.2023 CN 202310334542
(71) Applicant: PETKIT NETWORK TECHNOLOGY (SHANGHAI) CO., LTD., Shanghai 201100 (CN)
(72) Inventor: JIANG, Lihua, Shanghai 201100 (CN); GUO, Weike, Shanghai 201100 (CN); GUO, Weixue, Shanghai 201100 (CN); MA, Xiaoqing, Shanghai 201100 (CN); ZHANG, Junchao, Shanghai 201100 (CN)
(74) Representative: Cabinet Beaumont
(86) International application number: PCT/CN2023/126925
(87) International publication number: WO 2024/198331

(57) **Abstract**

Provided are an excrement collecting box and a fullness detection method. The device includes a housing, a sealing assembly, a collecting bag and a detection unit. The sealing assembly includes a left side sealing portion and a right side sealing portion. At least one of the left side sealing portion or the right side sealing portion is slidable relative to the housing. The left side sealing portion is configured to abut against the right side sealing portion. The collecting bag is connected to the housing. The outer sidewall of the collecting bag can be abutted against by the sealing assembly. The detection unit is rotatably disposed on the at least one of the left side sealing portion or the right side sealing portion. The detection unit can rotate towards the bottom wall of the collecting bag.

## Description

This application claims priority to Chinese Patent Application No. 202310334542.1 filed Mar. 31, 2023, the disclosure of which is incorporated herein by reference in its entirety.

### TECHNICAL FIELD

The present application relates to the technical field of pet toilets, for example, an excrement collecting box and a fullness detection method thereof.

### BACKGROUND

In the related art, pet toilets are directly connected to the outside, and pet excrement cannot be removed in time, resulting in odor emission. The related art provides a pet toilet that can handle excrement in time. After excretion by a pet, padding or litter mixed with pet excrement is separated from clean padding or litter through a vibration device or a stirring device and discharged into a bin bag, and the bin bag is closed up and temporarily stored so that the odor emission can be reduced. However, the device provided in the related art requires to close up and pack the bin bag and renew the bin bag with a new one each time after the pet excretes. Each bin bag can only be used for collecting excrement once, resulting in a waste of resources while increasing the cleaning frequency for a user.

### SUMMARY

The present application provides an excrement collecting box and a fullness detection method so that problems of a waste of bin bags and the increased cleaning frequency for pet toilets in the related art can be solved.

The present application provides an excrement collecting box configured to collect pet excrement. The excrement collecting box includes a housing, a sealing assembly, a collecting bag and a detection unit. The sealing assembly includes a left side sealing portion and a right side sealing portion. At least one of the left side sealing portion or the right side sealing portion is slidable relative to the housing. The left side sealing portion is configured to close with the right side sealing portion. The collecting bag is connected to the housing. An outer sidewall of the collecting bag is capable of being abutted against by the sealing assembly. The detection unit is rotatably disposed on the at least one of the left side sealing portion or the right side sealing portion. The detection unit is configured to, in response to the collecting bag being full, abut against the pet excrement to prevent the detection unit from rotating towards a bottom wall of the collecting bag.

The present application provides a fullness detection method for an excrement collecting box. The method is applied to the excrement collecting box in the preceding solution for detection. The fullness detection method includes the steps below. A sealing assembly is driven to close. After a preset time, a detection element detects whether the sealing assembly is in a closed position. In response to a detection result that the sealing assembly is in the closed position, the detection element determines that the excrement collecting box is not fully collected, and the sealing assembly is stopped from being driven to move. In response to a detection result that the sealing assembly is not in the closed position, the detection element determines that the excrement collecting box is full, and the sealing assembly is driven backward to return to an opened state.

### BRIEF DESCRIPTION OF DRAWINGS

FIG. 1 is a view illustrating the structure of an excrement collecting box in an opened state according to an embodiment of the present application.
FIG. 2 is a cross-sectional view of part A-A in FIG. 1.
FIG. 3 is a sectional view of part B-B in FIG. 1.
FIG. 4 is a view illustrating the structure of an excrement collecting box in an opened state where a housing is hidden according to an embodiment of the present application.
FIG. 5 is a side cross-sectional view of an excrement collecting box in an opened state according to an embodiment of the present application.
FIG. 6 is a view illustrating the structure of an excrement collecting box in a closed state according to an embodiment of the present application.
FIG. 7 is a cross-sectional view of part C-C in FIG. 6.
FIG. 8 is a side cross-sectional view of an excrement collecting box in a closed state according to an embodiment of the present application.
FIG. 9 is a view illustrating the structure of an excrement collecting box in a closed state where a housing is hidden according to an embodiment of the present application.
FIG. 10 is a flowchart of a fullness detection method for an excrement collecting box according to an embodiment of the present application.FIG. 11 is another flowchart of a fullness detection method for an excrement collecting box according to an embodiment of the present application.

### Reference list

- 11: left side sealing portion
- 111: left side drive block
- 1111: first limit portion
- 1112: first engagement portion
- 112: left side rotation shaft
- 113: sealing strip
- 114: magnet
- 12: left side detection member
- 21: right side sealing portion
- 211: right side drive block
- 2111: second limit portion
- 2112: second engagement portion
- 212: right side rotation shaft
- 22: right side detection member
- 31: drive unit
- 311: drive gear shaft
- 32: intermediate gear
- 33: output shaft
- 34: toothed pulley
- 41: synchronous toothed belt
- 42: guide support shaft
- 5: housing
- 6: collecting bag
- 71: opened position sensor
- 72: closed position sensor

### DETAILED DESCRIPTION

In the description of the present application, it is to be noted that orientations or position relations indicated by terms such as "center", "upper", "lower", "left", "right", "vertical", "horizontal", "in" and "out" are based on the drawings. These orientations or position relations are intended only to facilitate and simplify the description of the present application and not to indicate or imply that a device or element referred to must have such particular orientations or must be configured or operated in such particular orientations. Thus, these orientations or position relations are not to be construed as limiting the present application. Additionally, terms such as "first" and "second" are used only for the purpose of description and are not to be construed as indicating or implying relative importance. Terms "first position" and "second position" are two different positions. Moreover, when a first feature is described as "on", "above" or "over" a second feature, the first feature is right on, above or over the second feature, the first feature is obliquely on, above or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of the present application, it is to be noted that unless otherwise expressly specified and limited, terms "mounted", "connected to each other" and "connected" are to be understood in a broad sense as "securely connected", "detachably connected" or "integrally connected"; "mechanically connected" or "electrically connected"; "directly connected to each other" or "indirectly connected to each other via an intermediary"; or "intraconnected between two components". For those of ordinary skill in the art, specific meanings of the preceding terms in the present application may be understood based on specific situations.

Embodiments of the present application are described in detail below. Examples of the embodiments described below are illustrated in the drawings, where the same or similar reference numerals throughout the drawings represent the same or similar elements or elements having the same or similar functions. The examples described below with reference to the drawings are illustrative and used only for explaining the present application and are not to be construed as limiting the present application.

In the related art, pet toilets are directly connected to the outside, and pet excrement cannot be removed in time, resulting in odor emission. The related art provides a pet toilet that can handle excrement in time. After excretion by a pet, padding or litter mixed with pet excrement is separated from clean padding or litter through a vibration device or a stirring device and discharged into a bin bag, and the bin bag is closed up and temporarily stored so that the odor emission can be reduced. However, the device provided in the related art requires to close up and pack the bin bag and renew the bin bag with a new one each time after the pet excretes. Each bin bag can only be used for collecting excrement once, resulting in a waste of resources while increasing the cleaning frequency for a user.

In view of this, this embodiment provides an excrement collecting box. The excrement collecting box can also avoid the odor emission and solve the preceding problems.

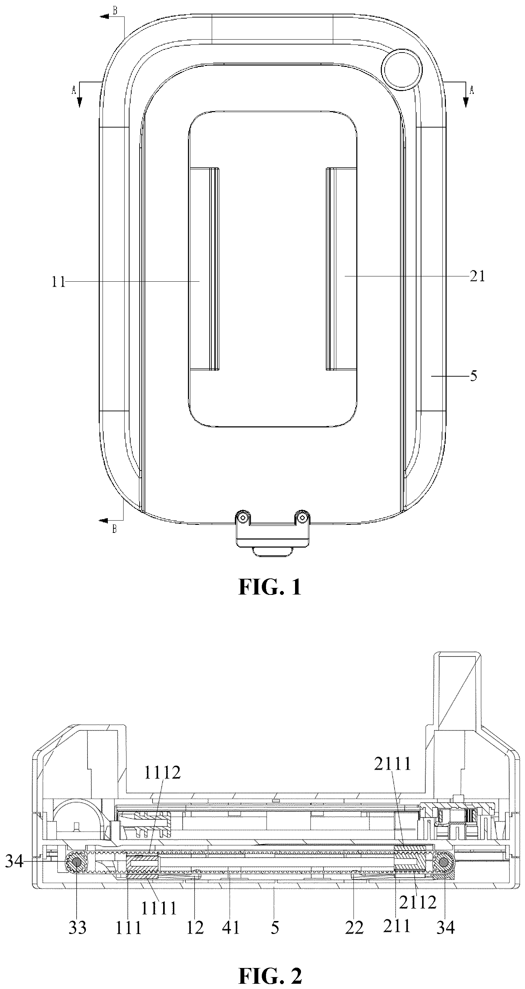

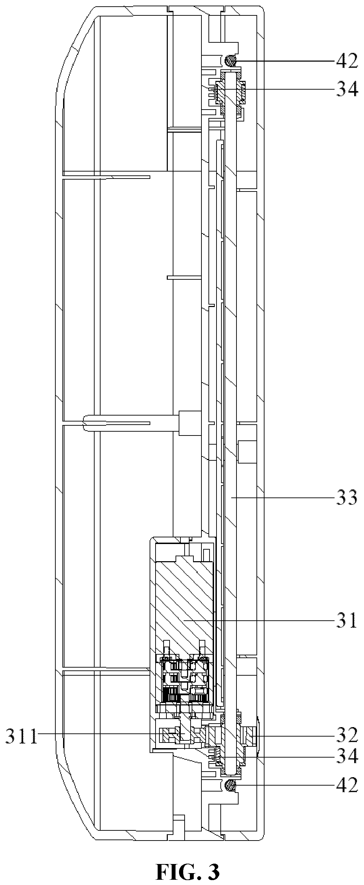

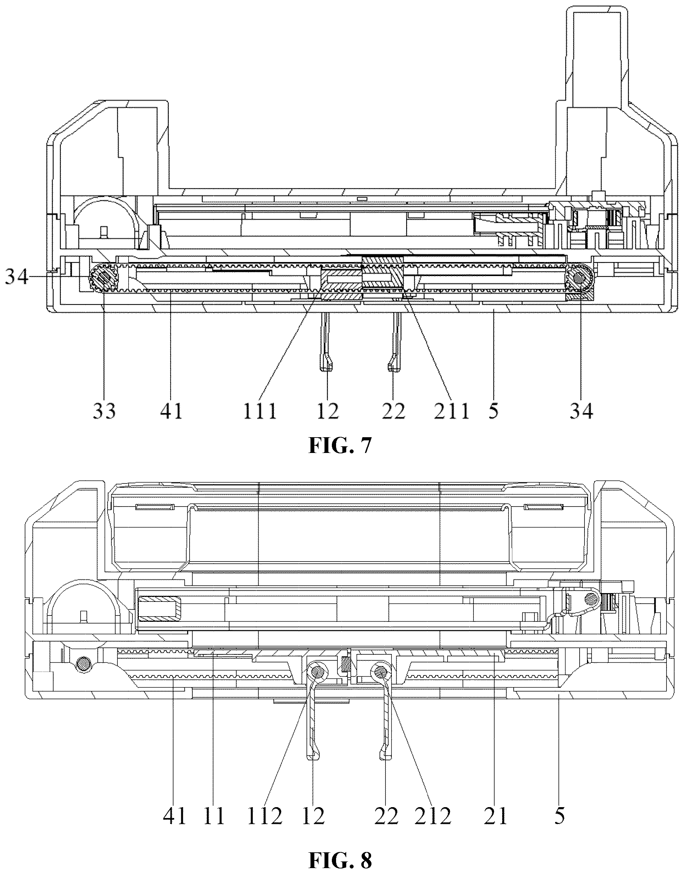

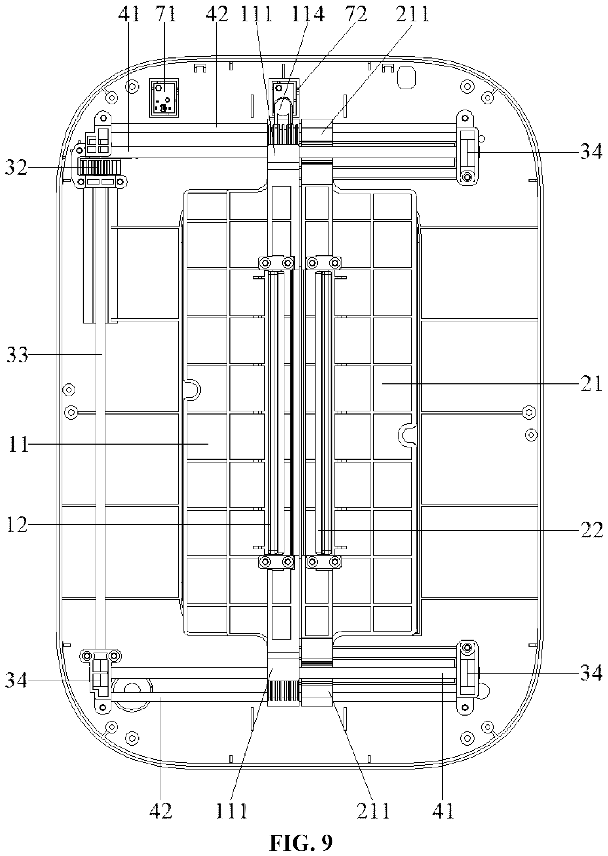

As shown in FIGS. 1 to 9, the present application provides an excrement collecting box. The excrement collecting box includes a housing 5, a sealing assembly, a collecting bag 6 and a detection unit. The sealing assembly includes a left side sealing portion 11 and a right side sealing portion 21. At least one of the left side sealing portion 11 or the right side sealing portion 21 can slide relative to the housing 5. The left side sealing portion 11 is configured to abut against and close with the right side sealing portion 21. The collecting bag 6 is connected to the housing 5. The outer sidewall of the collecting bag 6 can be abutted against by the sealing assembly. The detection unit is rotatably disposed on the at least one of the left side sealing portion 11 or the right side sealing portion 21. The detection unit can rotate towards the bottom wall of the collecting bag 6. When the collecting bag 6 is full, the detection unit can abut against pet excrement. After the left side sealing portion 11 abuts against the right side sealing portion 21, the collecting bag 6 is sealed by the sealing assembly so that the odor emission can be prevented. During the process of sealing the collecting bag 6 by the sealing assembly, whether the collecting bag 6 is full may be determined according to the state of the detection unit. When the collecting bag 6 is not full, the detection unit can rotate normally towards the bottom wall of the collecting bag 6 until the collecting bag 6 is sealed. When the collecting bag 6 is full, the detection unit cannot rotate towards the bottom wall of the collecting bag 6, or the rotation of the detection unit is blocked, whereby the user can replace the collecting bag 6 , which saves the collecting bag 6 and reduces the frequency of cleaning by the user, while also preventing the emission of odors..

In an embodiment, the left side sealing portion 11 and the right side sealing portion 21 can move close or away relative to each other. The detection unit is rotatably disposed on the at least one of the left side sealing portion 11 or the right side sealing portion 21. In this embodiment, the left side sealing portion 11 and the right side sealing portion 21 are provided with detection units respectively, and the detection units are rotatably connected to the left side sealing portion 11 and the right side sealing portion 21 respectively. The detection unit includes a left side rotation shaft 112, a left side detection member 12, a right side rotation shaft 212 and a right side detection member 22. The left side detection member 12 is rotatably connected to the left side sealing portion 11 through the left side rotation shaft 112, and the right side detection member 22 is rotatably connected to the right side sealing portion 21 through the right side rotation shaft 212. When the left side sealing portion 11 and the right side sealing portion 21 move close relative to each other, the left side detection member 12 and the right side detection member 22 slide relative to the housing 5, and the lengths of the left side detection member 12 and the right side detection member 22 extending beyond the housing 5 are increased. When the left side sealing portion 11 and the right side sealing portion 21 move away relative to each other, the left side detection member 12 and the right side detection member 22 slide relative to the housing 5, and the lengths of the left side detection member 12 and the right side detection member 22 extending beyond the housing 5 are decreased. The left side sealing portion 11 and the right side sealing portion 21 are provided with limit members respectively to prevent the left side sealing portion 11 and the right side sealing portion 12 from crossing a closed position when the left side sealing portion 11 and the right side sealing portion 21 move close relative to each other. Those skilled in the art may set limit members according to the actual engineering situation to limit positions of components and parts, and the specific structure is not specifically limited here.

In an embodiment, when the left side sealing portion 11 and the right side sealing portion 21 move close relative to each other, the left side detection member 12 and the right side detection member 22 can rotate towards the bottom wall of the collecting bag 6. When the left side sealing portion 11 and the right side sealing portion 21 move close relative to each other, the lengths of the left side detection member 12 and the right side detection member 22 extending beyond the housing 5 are increased, and the left side detection member 12 and the right side detection member 22 can rotate towards the bottom wall of the collecting bag 6 under the action of gravity of the left side detection member 12 and the right side detection member 22 or through torsion springs added on the rotation shafts. When the left side sealing portion 11 and the right side sealing portion 21 move away relative to each other, the lengths of the left side detection member 12 and the right side detection member 22 extending beyond the housing 5 are decreased, and the left side detection member 12 and the right side detection member 22 rotate towards the direction opposite to the bottom wall of the collecting bag 6 under the reactive force of the housing 5.

In an embodiment, when the excrement collecting box is not full, the left side detection member 12 and the right side detection member 22 can normally rotate towards the direction of the bottom wall of the collecting bag 6, and the left side sealing portion 11 and the right side sealing portion 21 can be closed normally, with the closed position located at the middle position between the left side sealing portion 11 and the right side sealing portion 21. In actual usage scenarios, when the excrement collecting box is full, the heights of accumulated pet excrement at different positions of the collecting bag 6 are uneven. This may cause that one of the left side detection member 12 or the right side detection member 22 is blocked from rotating towards the bottom wall of the collecting bag 6 while the other one of the left side detection member 12 or the right side detection member 22 can rotate normally. In this case, one of the left side sealing portion 11 or the right side sealing portion 21 cannot continue to move or has a reduced movement speed, while the other one of the left side sealing portion 11 or the right side sealing portion 21 can move normally. The setting of the limit members on the left side sealing portion 11 and the right side sealing portion 21 one to one ensures that when the preceding situation occurs, the left side sealing portion 11 or the right side sealing portion 21 can stop after reaching the closed position without crossing the closed position. In this manner, whether the collecting bag 6 is full can be easy to determine, while a sealing failure can also be avoided, and thus the odor emission can be prevented.

In an embodiment, when collecting bags 6 in different specifications are used for collection, the heights of excrement that the collecting bags 6 can store are different. In view of this, different length dimensions may be set for the left side detection member 12 and the right side detection member 22 for effectively detecting whether the collecting bag 6 is full. When the height of excrement that the collecting bag 6 can store is relatively high, the lengths of the left side detection member 12 and the right side detection member 22 are decreased to utilize the space within the collecting bag 6 to the maximum. Conversely, when the height of excrement that the collecting bag 6 can store is relatively low, the lengths of the left side detection member 12 and the right side detection member 22 are increased to prevent the collecting bag 6 from being unable to be sealed and packaged smoothly.

In an embodiment, as shown in FIGS. 2 to 9, the left side sealing portion 11 and the right side sealing portion 21 are driven by a drive transmission assembly. The drive transmission assembly is securely disposed on the housing 5. The drive transmission assembly includes a drive unit 31, an intermediate gear 32 and a transmission unit. The drive unit 31 is securely connected to the housing 5. The drive unit 31 may be a servo motor or a stepper motor. In an embodiment, the drive unit 31 may be a servo motor. The drive unit 31 is provided with a drive gear shaft 311. The drive gear shaft 311 engages with the intermediate gear 32. The intermediate gear 32 is sleeved on an output shaft 33. In an embodiment, the intermediate gear 32 is connected to the output shaft 33 with a key connection. The output shaft 33 is rotatably connected to the housing 5. At least one end of the output shaft 33 is in transmission connection with the transmission unit.

In an embodiment, the transmission unit includes a toothed pulley 34 and a synchronous toothed belt 41, and the toothed pulley 34 is sleeved on the output shaft 33. In an embodiment, the toothed pulley 34 is connected to the output shaft 33 with a key connection. The synchronous toothed belt 41 engages with the toothed pulley 34. A left side drive block 111 is disposed on an end portion of the left side sealing portion 11, and a right side drive block 211 is disposed on an end portion of the right side sealing portion 21. The left side drive block 111 and the right side drive block 211 are securely connected to the synchronous toothed belt 41. To enable the left side sealing portion 11 and the right side sealing portion 21 to move close or away relative to each other, in this embodiment, the left side drive block 111 is securely connected to an upper portion of the synchronous toothed belt 41 while the right side drive block 211 is securely connected to a lower portion of the synchronous toothed belt 41. When the synchronous toothed belt 41 rotates along the clockwise direction, the left side drive block 111 and the right side drive block 211 move close or away relative to each other, thereby driving the left side sealing portion 11 and the right side sealing portion 21 to move close or away relative to each other. When the synchronous toothed belt 41 rotates along the counterclockwise direction, the left side drive block 111 and the right side drive block 211 move away or close relative to each other, thereby driving the left side sealing portion 11 and the right side sealing portion 21 to move away or close relative to each other.

In other embodiments of the present application, the left side drive block 111 may also be securely connected to the lower portion of the synchronous toothed belt 41 while the right side drive block 211 may be securely connected to the upper portion of the synchronous toothed belt 41. In this manner, the left side drive block 111 and the right side drive block 211 can move close or away relative to each other. The specific implementation principles have been described in detail in the previous text, which are not repeated here.

To achieve a better connection effect, in this embodiment, the left side drive block 111 is provided with a first engagement portion 1112 and a first limit portion 1111, and the right side drive block 211 is provided with a second limit portion 2111 and a second engagement portion 2112. The first engagement portion 1112 is securely connected to the first limit portion 1111. The second engagement portion 2112 is securely connected to the second limit portion 2111. The first engagement portion 1112 and the second engagement portion 2112 are provided with engagement teeth respectively. The engagement teeth of the first engagement portion 1112 and the second engagement portion 2112 engage with belt teeth of the synchronous toothed belt 41, and the belt teeth of the synchronous toothed belt 41 drive the first engagement portion 1112 and the second engagement portion 2112 to move. The first limit portion 1111 and the second limit portion 2111 are located on the outer side of the synchronous toothed belt 41 and configured to avoid a runout of the synchronous toothed belt 41 during transmission. The setting of the first limit portion 1111 and the second limit portion 2111 avoids the disengagement of the belt teeth from the first engagement portion 1112 and the second engagement portion 2112 and a transmission failure due to the runout of the synchronous toothed belt 41 during transmission.

In an embodiment, to avoid a relative offset when the left side drive block 111 and the right side drive block 211 move close or away relative to each other, the transmission unit further includes a guide support shaft 42. The guide support shaft 42 is securely disposed on the housing 5. The guide support shaft 42 is parallel to the movement direction of the left side drive block 111 or the movement direction of the right side drive block 211. The left side drive block 111 and the right side drive block 211 are sleeved on the guide support shaft 42 and slidably connected to the guide support shaft 42.

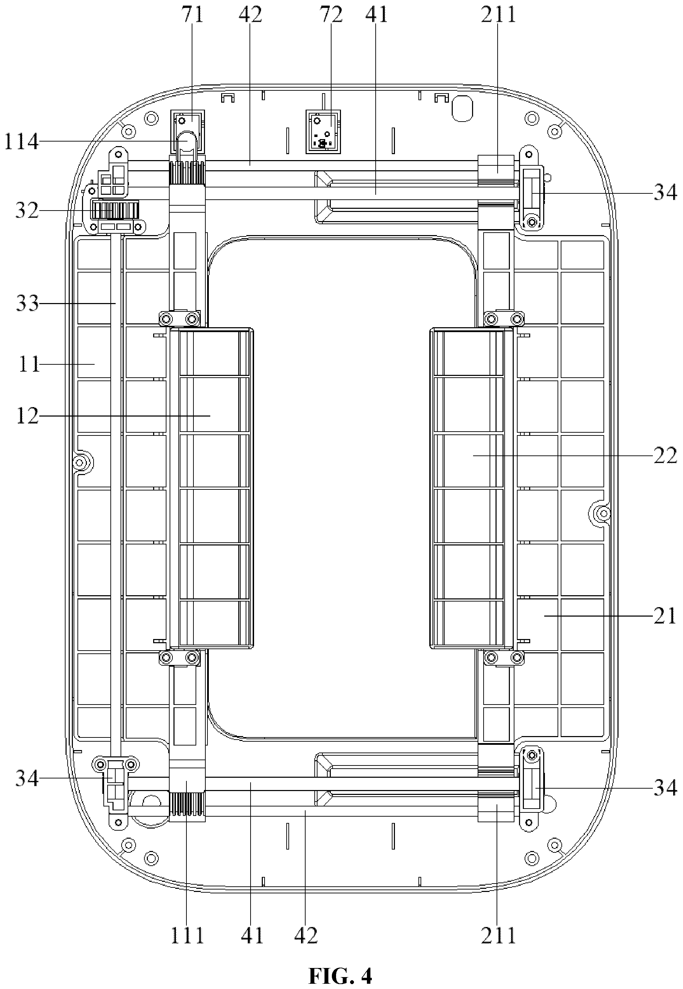

In an embodiment, as shown in FIG. 4, to ensure that the left side sealing portion 11 and the right side sealing portion 21 are evenly loaded, two transmission units are provided in the embodiment, and one of the two transmission units is in transmission connection with one end of the output shaft 33, and the other one of the two transmission units is in transmission connection with the other end of the output shaft 33. Correspondingly, two left side drive blocks 111 and two right side drive blocks 211 are provided. The two left side drive blocks 111 are located at two ends of the left side sealing portion 11 respectively, and the two right side drive blocks 211 are located at two ends of the right side sealing portion 21 respectively. This embodiment has provided a detailed description of the connection relationship between the output shaft 33 and the transmission unit, the composition of the transmission unit, as well as the connection relationship between the transmission unit and the left side drive block 111 and the right side drive block 211, and a specific analysis has been conducted on how to make the left side drive block 111 and the right side drive block 211 move close or away relative to each other, so the preceding content will not be repeated here. The setting of the output shaft 33, the toothed pulley 34 and the synchronous toothed belt 41 can ensure the consistency of the movement of two ends of the output shaft 33, thereby ensuring the movement reliability when the left side sealing portion 11 and the right side sealing portion 21 move close or away relative to each other.

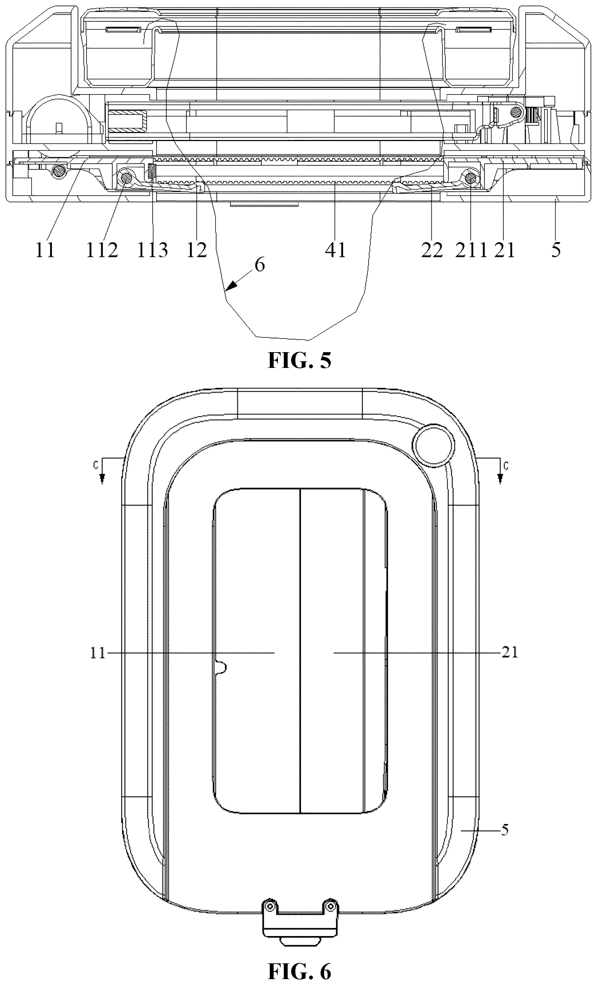

In an embodiment, as shown in FIG. 5, to enhance the sealing effect of the sealing assembly on the collecting bag 6, a sealing strip 113 is disposed on the left side sealing portion 11 or the right side sealing portion 21. In this embodiment, the sealing strip 113 is disposed on a side of the left side sealing portion 11 facing the right side sealing portion 21. In other embodiments, the sealing strip 113 may also be disposed on a side of the right side sealing portion 21 facing the left side sealing portion 11. When the left side sealing portion 11 abuts against the right side sealing portion 21, the sealing strip 113 abuts against the outer sidewall of the collecting bag 6. When the left side sealing portion 11 abuts against the right side sealing portion 21, creep occurs on the sealing strip 113, ensuring the sealing effect of the sealing assembly on the collecting bag 6. In other embodiments, the sealing effect of the sealing assembly on the collecting bag 6 may also be enhanced in other manners. For example, a protrusion is disposed on a side of one of the left side sealing portion 11 or the right side sealing portion 21 facing the other one of the left side sealing portion 11 or the right side sealing portion 21. Correspondingly, a groove is disposed on the other one of the left side sealing portion 11 or the right side sealing portion 21 for matching the protrusion. When the left side sealing portion 11 abuts against the right side sealing portion 21, the protrusion matches the groove, and the sealing effect on the collecting bag 6 is strengthened by using the principle of labyrinth seal.

In an embodiment, as shown in FIG. 4, to make it easier for the user to learn whether the excrement collecting box is full, the housing 5 is further provided with an opened position sensor 71 and a closed position sensor 72, and the sealing assembly has an opened state and a closed state. When the sealing assembly is in the opened state, at least part of the sealing assembly coincides with the opened position sensor 71. When the sealing assembly is in the closed state, the left side sealing portion 11 abuts against the right side sealing portion 21, and at least part of the sealing assembly coincides with the closed position sensor 72. When the excrement collecting box is fully collected, the collecting bag 6 stores a large amount of pet excrement. When the sealing assembly seals the collecting bag 6, the left side detection member 12 and the right side detection member 22 cannot continue to rotate towards the bottom wall of the collecting bag 6 due to the impact of the pet excrement. As a result, the sealing assembly cannot seal the collecting bag 6, that is, at least part of the sealing assembly cannot coincide with the closed position sensor 72. In an embodiment, due to the particularity of a usage scenario, under certain specific conditions, even if the collecting bag 6 is full, at least one of the left side detection member 12 or the right side detection member 22 is blocked from rotating towards the direction of the bottom wall of the collecting bag 6. However, at this time, the drive unit 31 is still driving the sealing assembly. Under the action of a driving force, at least one of the left side detection member 12 and the right side detection member 22 can squeeze the excrement and then continue to rotate towards the direction of the bottom wall of the collecting bag 6. That is, the sealing assembly can be in the closed state under the action of the driving force. It is to be understood that the sealing assembly also requires a longer time to turn to the closed state in this usage scenario. Therefore, whether the collecting bag 6 is full may be determined through a preset closing time. When the sealing assembly cannot be closed state within the preset time, it is indicated that the collecting bag 6 is fully collected at this time, which facilitates subsequent operations.

In this embodiment, the opened position sensor 71 and the closed position sensor 72 may be Hall sensors, proximity switches, or infrared sensors. In this embodiment, the opened position sensor 71 and the closed position sensor 72 are Hall position sensors. In other embodiments, the opened position sensor 71 and the closed position sensor 72 may also be set as different types of sensors. For example, the opened position sensor 71 is set as a Hall sensor, and the closed position sensor 72 is set as a proximity switch. The specific arrangement will not be exhaustive here. In this embodiment, to further enhance the sensitivity of the opened position Hall sensor and the closed position Hall sensor, one of the left side sealing portion 11 or the right side sealing portion 21 is provided with a magnet 114. When the sealing assembly is in the opened state, the magnet 114 is located above the opened position Hall sensor. When the sealing assembly is in the closed state, the magnet 114 is located above the closed position Hall sensor. The opened position Hall sensor and the closed position Hall sensor are communicatively connected to a processor, and the processor is securely connected to the housing 5.

In an embodiment, when the sealing assembly seals the collecting bag 6, the drive unit 31 drives forward, the drive gear shaft 311 engages with the intermediate gear 32, the intermediate gear 32 drives the output shaft 33 to rotate, the output shaft 33 drives toothed pulleys 34 disposed at two ends of the output shaft 33 to rotate, and the toothed pulleys 34 drive the synchronous toothed belt 41 for transmission. The left side drive block 111 and the right side drive block 211 engage with the lower portion and the upper portion of the synchronous toothed belt 41 respectively and drive the left side sealing portion 11 and the right side sealing portion 21 to move close relative to each other. If the collecting bag 6 is not full, the left side detection member 12 and the right side detection member 22 can rotate towards the direction of the bottom wall of the collecting bag 6, and the left side sealing portion 11 can abut against the right side sealing portion 21. If the collecting bag 6 is full, the left side detection member 12 and the right side detection member 22 are blocked from rotating towards the direction of the bottom wall of the collecting bag 6, and the left side sealing portion 11 cannot abut against the right side sealing portion 21. In this time, an audible and visual alarm device controlled by the processor and communicatively connected to the processor may prompt the user to renew the collecting bag 6 timely. The audible and visual alarm device may be one or both of a warning light and a horn. For controlling the audible and visual alarm device by the processor, reference may be made to the related art. Details are not repeated herein.

In this embodiment, the processor may be a centralized or distributed controller. For example, the processor may be an independent single-chip microcomputer or may be composed of multiple distributed single-chip microcomputers. The single-chip microcomputer can run control programs to control each member to achieve its function.

This embodiment provides a fullness detection method for an excrement collecting box. The fullness detection method is applied to the excrement collecting box provided in this embodiment of the present application for detection.

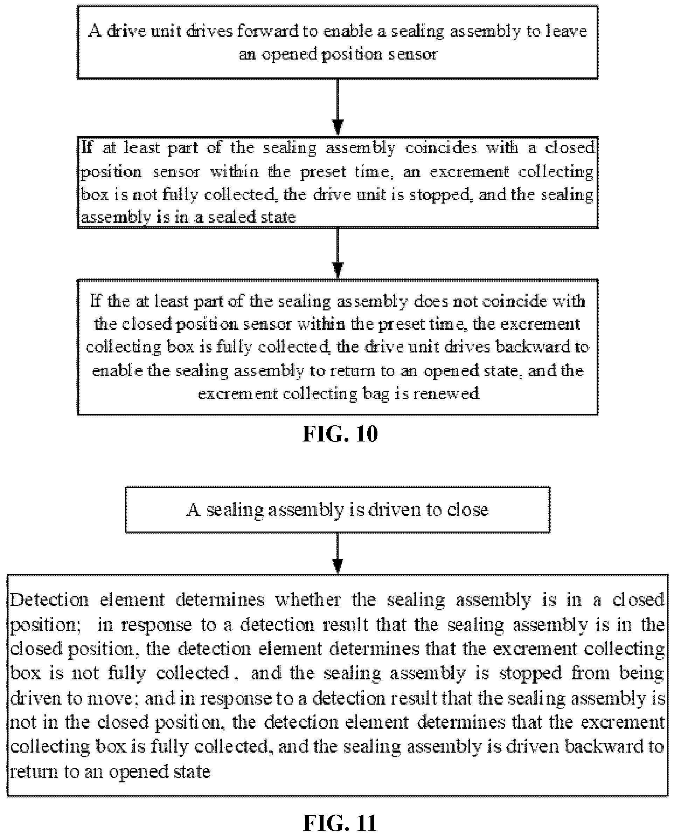

As shown in FIGS. 10 and 11, the fullness detection method includes the steps below.

In S 1, a drive unit 31 drives forward to enable a magnet 114 located at least part of a sealing assembly to leave the upper portion of an opened position Hall sensor, and a processor receives a signal that the magnet 114 leaves, and controls the drive unit 31 to drive the sealing assembly to move within the preset time.

In S2, the magnet 114 located at the at least part of the sealing assembly reaches the upper portion of a closed position Hall sensor within the preset time, the processor receives, within the preset time, an arrival signal of the magnet 114, and thus determines that an excrement collecting box is not full, the processor controls the drive unit 31 to stop, and the sealing assembly is in the closed state.

In S3, in the case where the sealing assembly does not reach the upper portion of the closed position Hall sensor located at a closed position sensor 72 within the preset time and the processor does not receive the arrival signal within the preset time, the processor determines that the excrement collecting box is full and controls the drive unit 31 to drive backward to enable the sealing assembly to return to the opened state while an audible and visual alarming is performed to prompt a user to renew the excrement collecting bag 6.

## Claims

1. An excrement collecting box configured to collect pet excrement, comprising:
a housing (5);
a sealing assembly comprising a left side sealing portion (11) and a right side sealing portion (21), wherein at least one of the left side sealing portion (11) or the right side sealing portion (21) is slidable relative to the housing (5), and the left side sealing portion (11) is configured to close with the right side sealing portion (21);
a collecting bag (6) connected to the housing (5) and capable of being abutted against by the sealing assembly; and
a detection unit rotatably disposed on the at least one of the left side sealing portion (11) or the right side sealing portion (21) and configured to, in response to the collecting bag (6) being fully collected, abut against the pet excrement to prevent the detection unit from rotating towards a bottom wall of the collecting bag.

2. The excrement collecting box according to claim 1, wherein the detection unit comprises a left side detection member (12) and a right side detection member (22), wherein the left side detection member (12) is rotatably disposed on the left side sealing portion (11), the right side detection member (22) is rotatably disposed on the right side sealing portion (21), the left side sealing portion (11) and the right side sealing portion (21) are capable of moving close or away relative to each other, and the detection unit is configured to rotate towards the bottom wall of the collecting bag (6) in response to the left side sealing portion (11) and the right side sealing portion (21) moving close relative to each other; and rotate in a direction opposite to the bottom wall of the collecting bag (6) in response to the left side sealing portion (11) and the right side sealing portion (21) moving away relative to each other.

3. The excrement collecting box according to claim 1, further comprising a drive transmission assembly disposed on the housing (5), wherein the left side sealing portion (11) is provided with a left side drive block (111), the right side sealing portion (21) is provided with a right side drive block (211), and the drive transmission assembly is in transmission connection with the left side drive block (111) and the right side drive block (211).

4. The excrement collecting box according to claim 3, wherein the drive transmission assembly comprises:
an output shaft (33) rotatably connected to the housing (5);
a drive unit (31) securely connected to the housing (5) and provided with a drive gear shaft (311);
an intermediate gear (32) securely connected to the output shaft (33) and engaging with the drive gear shaft (311), wherein the output shaft (33) is rotatably connected to the housing (5); and
a transmission unit in transmission connection with the output shaft (33), the left side drive block (111) and the right side drive block (211).

5. The excrement collecting box according to claim 4, wherein the transmission unit comprises a toothed pulley (34) and a synchronous toothed belt (41), wherein the toothed pulley (34) is sleeved on the output shaft (33), the synchronous toothed belt (41) engages with the toothed pulley (34), the left side drive block (111) engages with one of an upper portion of the synchronous toothed belt (41) or a lower portion of the synchronous toothed belt (41), and the right side drive block (211) engages with another one of the upper portion of the synchronous toothed belt (41) or the lower portion of the synchronous toothed belt (41).

6. The excrement collecting box according to claim 5, wherein the left side drive block (111) is provided with a first limit portion (1111) and a first engagement portion (1112), and the right side drive block (211) is provided with a second limit portion (2111) and a second engagement portion (2112), wherein the first engagement portion (1112) is securely connected to the first limit portion (1111), the second engagement portion (2112) is securely connected to the second limit portion (2111), the first engagement portion (1112) and the second engagement portion (2112) engage with belt teeth of the synchronous toothed belt (41) respectively, and the first limit portion (1111) and the second limit portion (2111) are located on an outer side of the synchronous toothed belt (41) and configured to avoid a runout of the synchronous toothed belt (41).

7. The excrement collecting box according to claim 6, wherein the transmission unit further comprises a guide support shaft (42) securely disposed on the housing (5), wherein the guide support shaft (42) is parallel to a movement direction of the left side drive block (111) or a movement direction of the right side drive block (211), and the left side drive block (111) and the right side drive block (211) are sleeved on the guide support shaft (42) and slidably connected to the guide support shaft (42).

8. The excrement collecting box according to claim 1, further comprising a sealing strip (113), wherein the sealing strip (113) is securely disposed on the left side sealing portion (11) or the right side sealing portion (21), and the sealing strip (113) abuts against an outer sidewall of the collecting bag (6) in response to the left side sealing portion (11) and the right side sealing portion (21) being closed.

9. The excrement collecting box according to claims 1 to 8, wherein the housing (5) is further provided with an opened position sensor (71) and a closed position sensor (72), the sealing assembly has an opened state and a closed state, at least part of the sealing assembly coincides with the opened position sensor (71) in response to the sealing assembly being in the opened state, and in response to the sealing assembly being in the closed state, the left side sealing portion (11) abuts against the right side sealing portion (21), and at least part of the sealing assembly coincides with the closed position sensor (72).

10. A fullness detection method for an excrement collecting box, applied to the excrement collecting box according to any one of claims 1 to 9 for detection, and comprising:
driving a sealing assembly to close; and
after a preset time, detecting, by a detection element, whether the sealing assembly is in a closed position; in response to a detection result that the sealing assembly is in the closed position, determining, by the detection element, that the excrement collecting box is not fully collected and stopping driving the sealing assembly to move; and in response to a detection result that the sealing assembly is not in the closed position, determining, by the detection element, that the excrement collecting box is fully collected and backward driving the sealing assembly to return to an opened state.
